# FASCICULE DE BREVET EUROPEEN

(11) **EP 2 526 321 B1**
(45) Date de publication et mention de la délivrance du brevet: **23.07.2014**
(21) Numéro de dépôt: 11705022.9
(22) Date de dépôt: 19.01.2011
(51) Int. Cl.: F16H 1/36, F16H 1/28

(54) **REDUCTEUR DE VITESSE ET MECANISME DE TRANSMISSION COMPRENANT UN TEL REDUCTEUR POUR PILOTER UN AERONEF**
REDUKTIONSGETRIEBE UND ÜBERTRAGUNGSMECHANISMUS MIT EINEM DERARTIGEN REDUKTIONSGETRIEBE ZUR STEUERUNG EINES FLUGZEUGES
REDUCTION GEAR AND TRANSMISSION MECHANISM INCLUDING SUCH A REDUCTION GEAR FOR CONTROLLING AN AIRCRAFT

(30) Priorité: 19.01.2010 FR 1050334
(43) Date de publication de la demande: 28.11.2012
(73) Titulaire: SKF Aerospace France, 26240 Saint-Vallier (FR)
(72) Inventeur: ROUSSEY, Bastien, F-26600 Tain L'Hermitage (FR)
(74) Mandataire: Grand, Guillaume
(86) Numéro de dépôt international: PCT/FR2011/050091
(87) Numéro de publication internationale: WO 2011/089354

(56) Documents cités:
- WO-A1-2007/135156
- US-A- 3 477 316
- US-A- 6 117 036
- US-A1- 2007 234 835

## Description

La présente invention concerne un réducteur de vitesse, ainsi qu'un mécanisme de transmission comprenant ce réducteur de vitesse.

Un aéronef, en particulier un avion, comporte généralement un mécanisme de transmission équipé d'au moins un levier, communément appelé « manche », que le pilote manoeuvre pour transmettre des commandes aux organes directionnels de l'aéronef. Le levier est relié à ces organes directionnels par une transmission de mouvements rotatifs, avec réduction de vitesse par l'intermédiaire d'un réducteur.

Un réducteur de vitesse de l'art antérieur comprend deux planétaires co-axiaux, l'un fixe et l'autre mobile en rotation autour de leur axe commun. Ces deux planétaires engrènent chacun un satellite propre, ces deux satellites étant montés rotatifs autour d'un axe commun, en étant supportés par un porte-satellites. Ce réducteur a pour entrée le porte-satellites et pour sortie le planétaire mobile.

En pratique, les couples et/ou les vitesses de manoeuvre de ce réducteur demeurent relativement faibles. Pour augmenter ces couples et/ou vitesses, il faut augmenter les efforts de rattrapage qui s'exercent sur les engrenages du réducteur, ce qui génère une friction relativement importante et fluctuante. Pour un couple et/ou une vitesse de manoeuvre supérieure à un seuil déterminé, on doit introduire un jeu dynamique égal au jeu des engrenages monté sans secteur de rattrapage. Pour obtenir une fonction rattrapage de jeu, ce réducteur induit donc un coût de fabrication significatif. De plus, l'ergonomie du levier et les sensations de pilotage s'en trouvent fortement dégradées car, pour assurer une bonne ergonomie de pilotage, le jeu angulaire que présente le levier lors des manoeuvres par le pilote doit en principe être le plus faible possible, voire nul, dans les deux sens d'entraînement, y compris pour des valeurs de couple significatives.

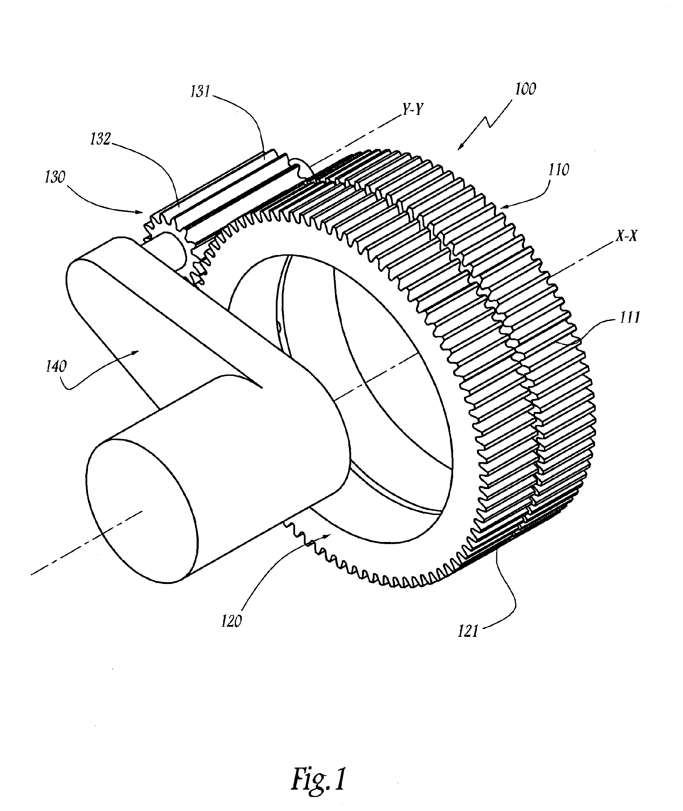

Ceci étant rappelé, une forme de réalisation particulière, connue de l'homme du métier, d'un réducteur de vitesse est montrée sur la figure 1. Ce réducteur, référencé 100, comporte deux planétaires co-axiaux : l'un, référencé 110, est fixe, tandis que l'autre, référencé 120, est mobile en rotation sur lui-même autour de leur axe commun X-X. Les dentures droites respectives 111 et 121 de ces planétaires 110 et 120 s'engrènent avec des dentures droites complémentaires 131 et 132 dont est muni un satellite long 130 supporté par un porte-satellites 140 de manière librement rotative autour d'un axe Y-Y parallèle à l'axe X-X. En prévoyant des nombres de dents différents pour les dentures 111 et 121, on peut utiliser le différentiel de vitesses entre les planétaires 110 et 120 grâce au satellite 130 qui aligne les dentures 111 et 121 là où le satellite s'engrène avec ces dentures.

Dans l'exemple de réalisation montré sur la figure 1, le satellite 130 est placé au point de la périphérie des planétaires 110 et 120 où les dentures 111 et 121 sont en phase : dans ces conditions, comme représenté sur la figure 1, les dentures 131 et 132 s'étendent rigoureusement dans le prolongement rectiligne l'une de l'autre suivant la direction de l'axe Y-Y. En pratique, on comprend que si le satellite 130 est placé en n'importe quel autre point de la périphérie des planétaires 110 et 120, les dentures droites 131 et 132 sont à déphaser angulairement autour de l'axe Y-Y l'une vis-à-vis de l'autre, pour tenir compte du déphasage angulaire autour de l'axe X-X entre les dentures 111 et 121, lié au fait que les nombres de dents respectifs de ces deux dentures 111 et 121 diffèrent l'un de l'autre.

Dans ces conditions, dès qu'on cherche à installer plusieurs satellites autour des planétaires 110 et 120, dans le but de récupérer une forte densité de puissance avec un encombrement minimal pour le réducteur, chaque satellite doit présenter, suivant sa longueur, deux dentures droites, déphasées l'une par rapport à l'autre en fonction de l'emplacement prévu pour ce satellite suivant la périphérie des deux planétaires, en vue de respectivement engrener la denture du planétaire fixe et la denture, plus ou moins déphasée, du planétaire mobile. Ainsi, les différents satellites installés sont tous différents les uns des autres, nécessitent une grande précision de fabrication pour éviter le blocage du réducteur dû au niveau élevé d'hyperstaticité, et doivent être assemblés sans erreur à leur emplacement dédié. De plus, ces satellites possèdent un degré de liberté en translation suivant leur direction longitudinale, par coulissement relatif entre leurs dentures et les dentures 111 et 121 des planétaires fixe et mobile, si bien que le réducteur doit généralement intégrer des aménagements additionnels pour contrôler, voire neutraliser ce degré de liberté axial. Le coût de fabrication d'un tel réducteur est donc significatif.

Ainsi, WO-A-2007/135156, sur lequel est basé le préambule de la revendication 1, propose un réducteur de vitesse de ce type, dont les dentures peuvent en outre être prévues hélicoïdales. Le montage de ce réducteur nécessite des aménagements complexes : l'une des deux dentures de chaque satellite présent est délimitée par une couronne rapportée sur le reste du satellite, en étant conçue pour être désaccouplée angulairement du reste du satellite pour permettre l'engagement de cette denture avec un planétaire mobile associé, tandis que l'engagement entre l'autre denture de ce satellite et un planétaire fixe associé a été réalisé préalablement.

Le but de la présente invention est de proposer un réducteur de vitesse qui, tout en permettant de transmettre des couples importants, avec une forte réduction de vitesse, et tout en étant économique, robuste et à faible jeu rotatif, soit rapide et fiable à assembler.

A cet effet, l'invention a pour objet un réducteur de vitesse, tel que défini à la revendication 1.

L'idée à la base de l'invention est de prévoir, pour les dentures des planétaires fixe et mobile, des dentures hélicoïdales qui sont inversées l'une vis-à-vis de l'autre, tout en délimitant entre elles un espace libre. Ainsi, ces deux planétaires positionnés coaxialement côte-à-côte donnent l'impression visuelle d'une roue ou d'une couronne à chevrons. Bien entendu, les deux dentures de chaque satellite sont prévues complémentaires des dentures hélicoïdales des planétaires fixe et mobile pour s'engrener avec ces dérnières : les deux dentures de chaque satellite sont donc elles aussi hélicoïdales inversées. Grâce à l'invention, la composante axiale des efforts transmis entre les planétaires et les satellites est sensiblement équilibrée sur chaque satellite. De cette façon, lorsqu'on utilise le porte-satellites comme entrée tandis qu'on récupère directement un fort rapport de réduction sur le planétaire mobile, utilisé comme sortie, le couple de sortie est quasiment identique au couple de réaction sur le bâti, la différence correspondant au couple d'entrée. De plus, le cas échéant en prévoyant avantageusement que tous les satellites du réducteur sont identiques les uns aux autres, l'invention permet de supprimer le degré de liberté axiale évoquée plus haut, grâce à un auto-positionnement axial des satellites : en un point de la circonférence des planétaires, et pour une position angulaire quelconque de l'entrée et de la sortie du réducteur, il ne correspond, pour chaque satellite, qu'une seule position axiale possible qui, une fois que ce satellite est, grâce à l'espace libre entre les dentures des planétaires fixe et mobile, positionné axialement « à cheval » entre les planétaires fixe et mobile pour être engagé avec les dentures de ces derniers, ne change plus pendant le fonctionnement du réducteur.

Le réducteur selon l'invention permet donc, de manière compacte, de faire transiter une forte densité de puissance, tout en étant facile et économique à fabriquer.

Des caractéristiques additionnelles avantageuses du réducteur de vitesse conforme à l'invention, prises isolément ou selon toutes les combinaisons techniquement possibles, sont spécifiées aux revendications 2 à 9.

L'invention a également pour objet un mécanisme de transmission de mouvement pour piloter un aéronef, tel que défini à la revendication 10.

L'invention sera mieux comprise à la lecture de la description qui va suivre, donnée uniquement à titre d'exemple et faite en se référant aux dessins sur lesquels :
- la figure 1 est une vue en perspective d'un réducteur de l'art antérieur ;
- la figure 2 est une vue en perspective d'un réducteur conforme à l'invention ;
- la figure 3 est une vue analogue à la figure 1, dans laquelle une partie d'un des composants du réducteur a été retirée, à des fins de visibilité ;
- la figure 4 est une vue en élévation suivant une direction perpendiculaire à l'axe de rotation principal du réducteur, plusieurs des composants de ce réducteur étant omis à des fins de visibilité ;
- la figure 5 est une coupe d'un mécanisme de transmission de mouvement, qui intègre un réducteur conforme à l'invention ; et
- la figure 6 est une coupe d'une autre forme de réalisation d'un réducteur conforme à l'invention.

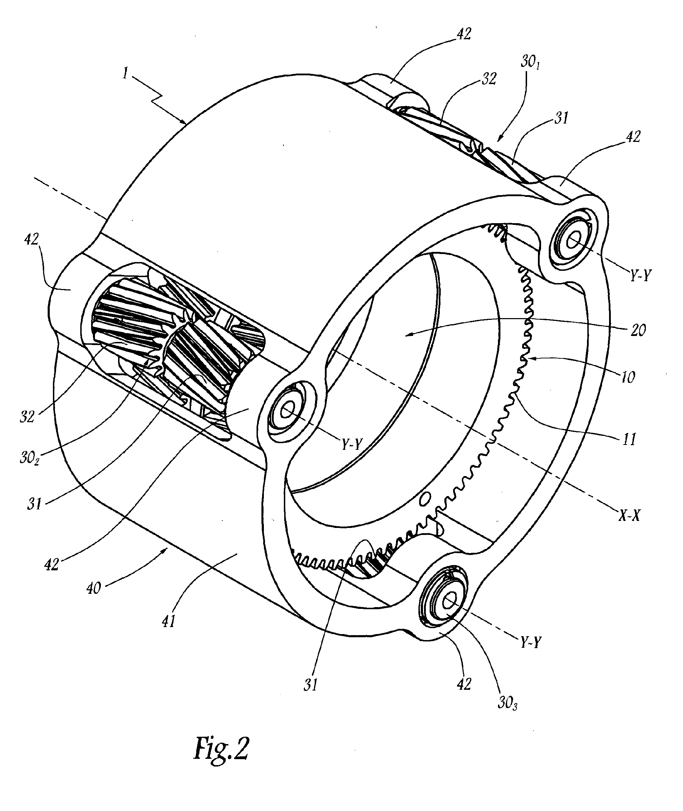

Sur les figures 2 à 4 est représenté un réducteur mécanique de vitesse 1, comportant deux solaires 10 et 20 coaxiaux, qui correspondent respectivement à des roues extérieurement dentées.

Le solaire 10 est, en service, solidarisé fixement à un bâti, non représenté, du réducteur 1, immobilisant ce solaire en particulier en rotation autour de son axe central X-X commun avec l'autre solaire 20.

Le solaire 20 est, quant à lui, monté, par rapport au solaire fixe 10, rotatif sur lui-même autour de l'axe X-X.

En vue d'obtenir un différentiel de vitesses de rotation entre les solaires fixe 10 et mobile 20, les dentures respectives 11 et 21 de ces solaires ont des nombres de dents respectifs différents l'un de l'autre. Par exemple, le nombre de dents de la denture 11 est égal au nombre de dents de la denture 21, plus ou moins une seule dent. En pratique, le nombre de dents de la denture 11 ne peut être choisi au hasard, mais doit satisfaire les conditions d'engrènement du système.

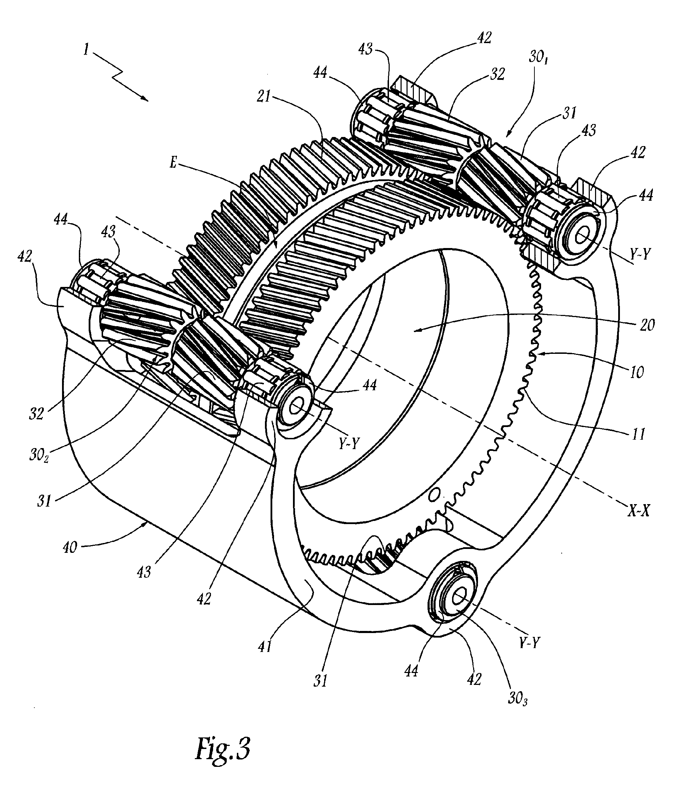

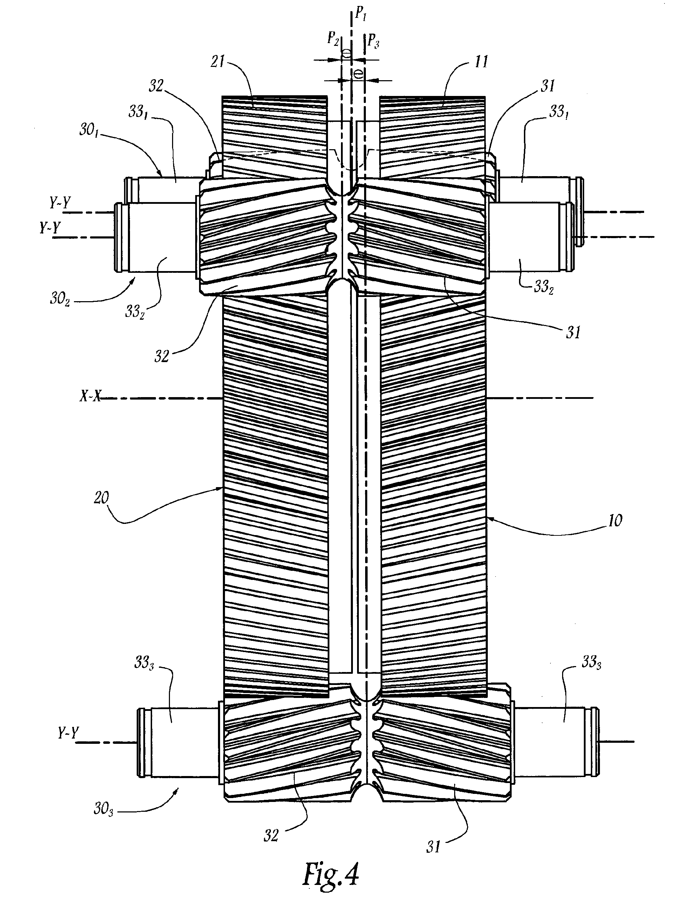

De plus, comme bien visible sur les figures 3 et 4, les dentures 11 et 21 sont hélicoïdales, à hélices respectives à la fois centrées sur l'axe X-X et inversées l'une par rapport à l'autre. Ainsi, lorsqu'on observe extérieurement les solaires fixe 10 et mobile 20 accolés l'un à l'autre comme sur la figure 4, ces deux solaires semblent former conjointement une roue à chevrons.

Plus précisément, pour des raisons qui apparaitront plus loin, les dentures 11 et 21 sont distantes l'une de l'autre suivant la direction de l'axe X-X et forment ainsi entre elles un espace libre E, qui s'étend sur toute la périphérie des solaires fixe 10 et mobile 20.

Le réducteur 1 comporte également trois satellites 30₁, 30₂ et 30₃ qui sont situés extérieurement autour des solaires fixe 10 et mobile 20, en étant répartis de manière sensiblement uniforme autour de l'axe X-X. Chaque satellite 30₁, 30₂, 30₃ relie mécaniquement les solaires fixe 10 et mobile 20 l'un à l'autre. A cet effet, chaque satellite 30₁, 30₂, 30₃ présente une forme allongée centrée sur un axe Y-Y parallèle à l'axe X-X et est rigidement muni de deux dentures extérieures 31 et 32 successives suivant la direction de son axe Y-Y : la denture 31 est sensiblement complémentaire de la denture 11, afin d'engrener cette dernière, tandis que la denture 32 est sensiblement complémentaire de la denture 21, afin d'engrener cette dernière. Ainsi, comme bien visible sur les figures 3 et 4, les dentures 31 et 32 sont hélicoïdales à hélices respectives à la fois centrées sur l'axe Y-Y et inversées l'une par rapport à l'autre.

Avantageusement, les dentures 31 et 32 de chaque satellite 30 sont rigoureusement symétriques l'une de l'autre par rapport à un plan médian du satellite, perpendiculaire à son axe Y-Y : sur la figure 4, les plans de symétrie précités respectivement associés aux satellites 30₁, 30₂ et 30₃ sont référencés P₁, P₂ et P₃. Moyennant des déports respectifs différents pour les solaires 10 et 20, les performances d'engrènement entre, d'une part, les dentures 31 et 32 et, d'autre part, la denture 11 du solaire fixe 10 et la denture 21 du solaire mobile 20 sont parfaitement satisfaisantes, avec une capacité de transmission de couple en sortie d'autant plus forte lorsque la différence entre les nombres de dents respectifs des dentures 11 et 21 est limitée à une seule dent.

En service, les efforts de transmission entre, d'une part, les dentures 31 et 32 et, d'autre part, les dentures 11 et 21 ont leur composante axiale équilibrée sur les dentures 31 et 32 pour chaque satellite 30₁, 30₂, 30₃. La coopération entre les dentures hélicoïdales 11 et 31, et entre les dentures hélicoïdales 21 et 32 immobilise ainsi axialement chaque satellite 30₁, 30₂, 30₃, tout en assurant une transmission de couple efficace. Autrement dit, une fois que chaque satellite est positionné axialement « à cheval » entre le solaire fixe 10 et le solaire mobile 20, sa position axiale ne change plus pendant le fonctionnement du réducteur 1.

De plus, les trois satellites 30₁, 30₂ et 30₃ sont avantageusement identiques les uns aux autres, ce qui en facilite la fabrication et l'assemblage au sein du réducteur 1. Dans ce cas, en un point de la circonférence des solaires fixe 10 et mobile 20, et pour une position angulaire relative quelconque entre ces solaires, il ne correspond qu'un seul positionnement axial possible pour chaque satellite. Autrement dit, comme bien visible sur la figure 4, dans la mesure où les trois satellites 30₁, 30₂, 30₃ sont répartis à 120° l'un de l'autre autour de l'axe X-X, ils occupent des positions axiales respectives différentes les uns des autres : dans l'exemple représenté, le satellite 30₁ a son plan de symétrie P₁ situé sensiblement au milieu de l'espace libre E entre les dentures 11 et 21, tandis que les plans de symétrie P₂ et P₃ associés respectivement aux satellites 30₂ et 30₃ sont situés de part et d'autre du plan P₁. On comprend donc que l'espace libre précité E permet, lors de l'assemblage du réducteur 1, d'ajuster le positionnement axial de chaque satellite 30₁, 30₂, 30₃ pour à la fois faire coopérer les dentures 11 et 31 entre elles et faire coopérer les dentures 21 et 32 entre elles. Autrement dit, par ajustement du positionnement axial de chaque satellite 30₁, 30₂, 30₃, permis par la présence de l'espace libre E, la denture 31 du satellite peut être engagée avec la denture 11 du solaire 10 tandis que, concomitamment, la denture 32 de ce satellite se trouve engagée avec la denture 21 du solaire 20.

Cela revient à dire que, d'un côté axial ou de l'autre de l'ensemble constitué par les solaires fixe 10 et mobile 20, les extrémités axiales 33₁, 33₂ et 33₃ des satellites 30₁, 30₂ et 30₃ sont positionnées à des niveaux différents suivant la direction de l'axe X-X et définissent ainsi un plan incliné qui n'est pas perpendiculaire à l'axe X-X : en service, l'orientation de ce plan incliné tourne autour de l'axe X-X, étant remarqué que l'inclinaison de ce plan dépend principalement de l'angle de l'hélice de construction des dentures hélicoïdales 11, 21, 31 et 32.

En pratique, le fait que, ici, le plan de symétrie P₁ associé au satellite 30₁ soit situé sensiblement à égale distance axiale des dentures 11 et 21, alors que les plans de symétrie P₂ et P₃ respectivement associés aux satellites 30₂ et 30₃ sont situés de part et d'autre du plan P₁, avec sensiblement le même écartement axial relatif, noté e sur la figure 4, permet de limiter autant que possible l'encombrement axial total de l'assemblage des solaires 10 et 20 et des satellites 30₁, 30₂ et 30₃. Pour des dentures ayant un module apparent fixé, le choix de l'angle d'hélice modifiera le module réel de même que la distance e. La valeur des angles d'hélice est un compromis : l'hélice élevée diminue la distance e, ainsi que l'encombrement axial, mais réduit aussi le couple maximal transmissible, car il se créé des efforts axiaux qui sollicitent les matériaux sans pour autant contribuer à la transmission d'un couple. On veillera cependant à ce que la distance e précitée soit raisonnable au regard de l'implantation retenue, parmi les différentes configurations possibles, autour des solaires 10 et 20, des trois satellites 30₁, 30₂ et 30₃ répartis régulièrement autour de l'axe X-X.

Par ailleurs, en vue de limiter la masse et l'inertie des satellites 30₁, 30₂ et 30₃, afin de limiter l'inertie inverse du réducteur 1, ces satellites peuvent avantageusement être réalisés en matière plastique, notamment en PEEK ou en nylon synthétique. Cette solution économique a également l'avantage de limiter la friction entre les satellites et les solaires fixe 10 et mobile 20, grâce à la souplesse inhérente de cette matière plastique.

Les satellites 30₁, 30₂ et 30₃ sont supportés de manière librement rotative autour de leur axe respectif Y-Y par un porte-satellites 40 à même de tourner sur lui-même autour de l'axe X-X, comme représenté sur les figures 2 et 3. Ce porte-satellites 40 guide ainsi les axes Y-Y en rotation autour de l'axe X-X et, de ce fait, subit en service des contraintes de torsion significatives. Il est à noter qu'au moins un des trois satellites doit être positionné axialement dans le porte-satellite 40, sans obligation de mise en place d'éléments roulants pour ce positionnement.

Avantageusement, ces contraintes sont supportées efficacement en conférant au corps principal 41 du porte-satellites 40 une forme enveloppante, ici globalement cylindrique centrée sur l'axe X-X. Ce corps principal 41 entoure ainsi extérieurement les solaires 10 et 20 et inclut, pour chacun des satellites 30₁, 30₂ et 30₃, deux bagues 42 axialement opposées l'une à l'autre, conformées pour recevoir et guider en rotation les extrémités axiales opposées 33₁, 33₂, 33₃ du satellite. Autrement dit, chacune des deux extrémités 33₁, 33₂, 33₃ de chaque satellite 30₁, 30₂, 30₃ correspond, en quelque sorte, à un tourillon rotatif qui, en service, s'appuie radialement sur la bague 42, avec interposition d'un palier de guidage en rotation 43, comme bien visible sur la figure 3.

De préférence, comme représenté sur les figures, ces paliers de guidage 43 sont constitués de roulements à aiguilles, retenus autour des extrémités 33₁, 33₂, 33₃ de chaque satellite par des circlips 44.

Pour chaque satellite 30₁, 30₂, 30₃, les deux bagues 42, intérieurement munies des paliers de guidage 43, encaissent ainsi efficacement les contraintes appliquées au satellite, qui tendent à écarter son axe de rotation Y-Y de sa position parallèle à l'axe X-X.

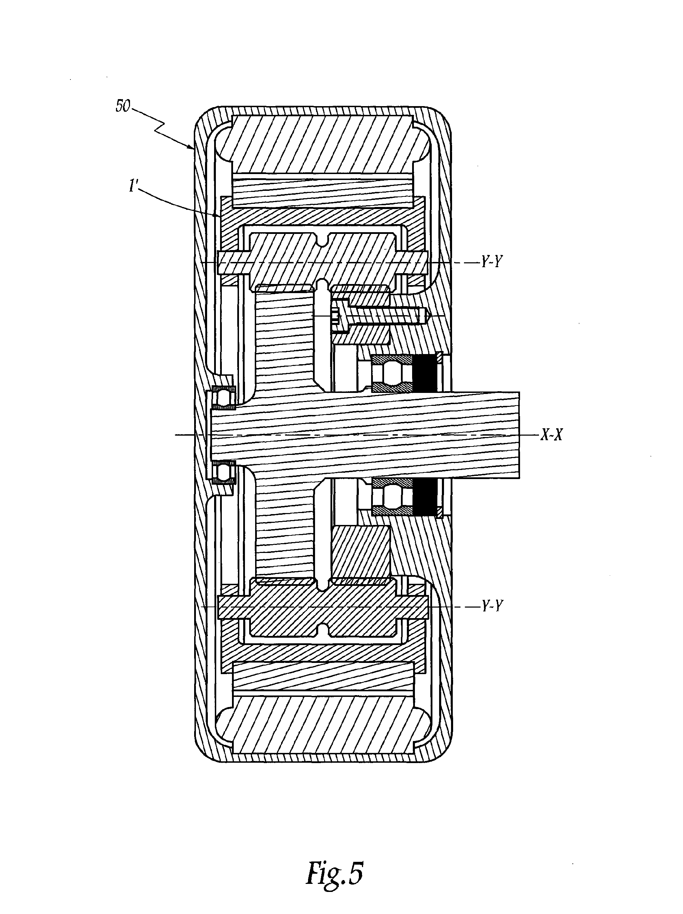

Dans le cadre d'une mise en service préférée du réducteur 1, notamment pour piloter un aéronef comme évoqué en introduction du présent document, ce réducteur 1 est intégré à un mécanisme de transmission entre le « manche » et les organes directionnels de l'aéronef, de manière à utiliser le porte-satellites 40 comme arbre d'entrée tandis que le solaire mobile 20 est utilisé comme arbre de sortie : pour un tour de porte-satellites, le solaire mobile tourne de 1/Z tour ou 1/(Z+1) tour selon que le solaire mobile a une dent en plus ou une dent en moins par rapport aux Z dents du solaire fixe 10, grâce aux satellites 30₁, 30₂ et 30₃ reliant mécaniquement les dentures 11 et 21. On obtient alors un fort rapport de réduction, par exemple d'au moins soixante, avec un jeu angulaire faible entre l'entrée et la sortie, et avec un couple de sortie quasiment identique au couple de réaction sur le bâti, la différence entre eux correspondant au couple d'entrée. Un exemple d'une telle mise en situation de l'invention est illustrée par la figure 5 qui représente un mécanisme de moto-réduction 50 tel que défini ci-dessus, utilisant un moteur dit moteur couple, à rotor creux, et intégrant un réducteur 1' similaire au réducteur 1.

Par ailleurs, l'intérêt des dentures hélicoïdales 11, 21, 31 et 32 du réducteur 1 est alors remarquable, dans le sens où elles supportent la transmission de couples ayant des intensités élevées, sans supporter le coût de devoir être préalablement fabriquées et assemblées avec une grande précision pour tenir compte du déphasage variable périphérique entre les solaires fixe et mobile. De plus, dans la mesure où les trois satellites 30₁, 30₂ et 30₃ sont individuellement identiques, ils supportent chacun des efforts de même intensité, ce qui n'induit pas, à la longue, de comportements mécaniques dissymétriques entre eux.

Pour augmenter encore le rapport de réduction, le couple d'entrée est, en variante, non pas appliqué directement au porte-satellites 40, mais à un élément d'engrenage additionnel, tel qu'une roue ou une couronne dentée, qui engrène ce porte-satellites.

Bien entendu, d'autres utilisations du réducteur 1, que celle évoquée juste ci-dessus, sont possibles, notamment celle consistant à inverser l'entrée et la sortie par rapport à l'utilisation ci-dessus.

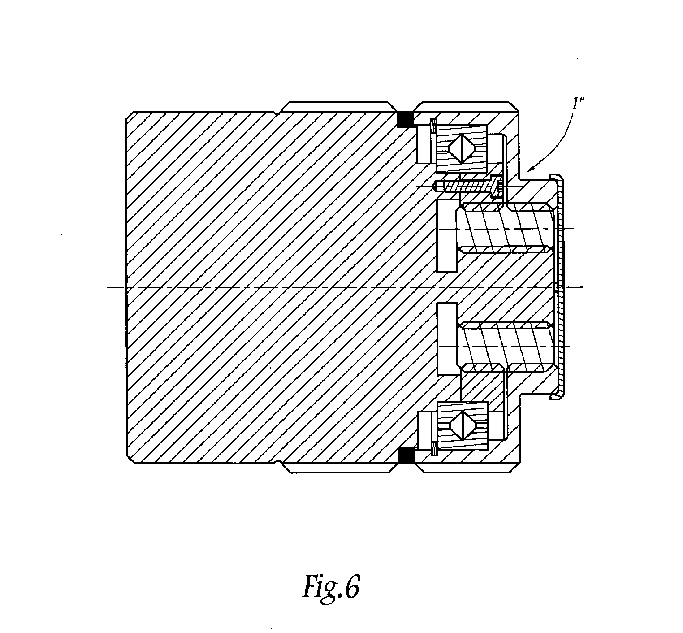

Enfin, divers aménagements et variantes au réducteur 1 sont envisageables. A titre d'exemples :
- le nombre de satellites du réducteur 1 n'est pas limité à trois ; ainsi, un seul satellite peut être prévu ou bien, au contraire, davantage de satellites peuvent être prévus, augmentant de ce fait le niveau d'hyperstaticité du réducteur, sans pour autant induire des risques significatifs de blocage ;
- plutôt que de disposer les différents satellites extérieurement aux solaires fixe 10 et mobile 20, ces satellites peuvent être agencés à l'intérieur de couronnes dentées, respectivement fixe et mobile, fonctionnement analogues aux solaires 10 et 20 ; autrement dit, l'invention s'applique aussi bien à un réducteur, tel que le réducteur 1 présenté jusqu'ici, dans lequel le ou les satellites engrènent des solaires, que l'on peut autrement appeler des planétaires intérieurs, qu'à un réducteur dont le ou les satellites engrènent les couronnes dentées précitées, que l'on peut alors qualifier de planétaires extérieurs ; cette alternative de réalisation est illustrée par la figure 6 qui représente un réducteur 1" à couronnes dentées, qui est monté dans un motoréducteur compact, à cannelures extérieures, pouvant être utilisé directement comme joint d'articulation motorisé dans l'industrie ou en robotique par exemple ; et/ou
- à titre optionnel, des éléments additionnels, notamment élastiques, servant à plaquer le ou les satellites sur les planétaires, avec un effort défini et/ou un débattement donné, peuvent être mis en place afin de réaliser, si besoin, un calage radial ou un rattrapage de jeu axial ; de tels éléments seront avantageusement placés entre le ou les satellites et le porte-satellites.

## Revendications

1. Réducteur de vitesse (1 ; 1' ; 1 "), comportant :
- un planétaire fixe (10) adapté pour être solidarisé fixement à un bâti,
- un planétaire mobile (20) qui, par rapport au planétaire fixe, est adapté pour tourner sur lui-même autour d'un axe de rotation principal (X-X), les planétaires fixe et mobile étant pourvus de dentures respectives (11, 21), qui sont co-axiales et hélicoïdales, en étant centrées sur l'axe de rotation principal, et dont les nombres de dents respectifs sont différents l'un de l'autre,
- au moins un satellite (30₁, 30₂, 30₃), qui est rotatif sur lui-même autour d'un axe de rotation secondaire (Y-Y) sensiblement parallèle à l'axe de rotation principal (X-X) et qui est muni de première (31) et seconde (32) dentures qui sont hélicoïdales et centrées sur l'axe de rotation secondaire et qui engrènent respectivement la denture (11) du planétaire fixe (10) et la denture (21) du planétaire mobile (20), en étant respectivement complémentaires des dentures hélicoïdales des planétaires fixe et mobile, et
- un porte-satellites (40), qui supporte le ou les satellites (30₁, 30₂, 30₃) de manière librement rotative autour de leur axe de rotation secondaire (Y-Y) et qui est adapté pour tourner sur lui-même autour de l'axe de rotation principal (X-X), **caractérisé en ce que** la denture hélicoïdale (11) du planétaire fixe (10) et la denture hélicoïdale (21) du planétaire mobile (20) sont inversées l'une par rapport à l'autre et sont distantes l'une de l'autre suivant la direction de l'axe de rotation principal (X-X), en formant ainsi entre elles un espace libre (E) pour, lors de l'assemblage du réducteur (1), ajuster le positionnement axial du ou de chaque satellite (30₁, 30₂, 30₃) de manière à engager les première (31) et seconde (32) dentures de ce satellite avec les dentures respectives des planétaires fixe et mobile.

2. Réducteur suivant la revendication 1, **caractérisé en ce que** les nombres de dents respectifs de la denture (11) du planétaire fixe (10) et de la denture (21) du planétaire mobile (20) diffèrent l'un de l'autre d'une seule dent.

3. Réducteur suivant l'une des revendications 1 ou 2, **caractérisé en ce qu'**il comporte en outre des moyens de rattrapage de jeu, qui sont à même de plaquer avec un effort défini le ou chaque satellite (30₁, 30₂, 30₃) sur les planétaires (10, 20).

4. Réducteur suivant l'une quelconque des revendications précédentes, **caractérisé en ce que** les première (31) et seconde (32) dentures du ou de chaque satellite (30₁, 30₂, 30₃) sont symétriques l'une de l'autre par rapport à un plan (P₁, P₂, P₃) perpendiculaire à l'axe de rotation secondaire (Y-Y) associé à ce satellite.

5. Réducteur suivant l'une quelconque des revendications précédentes, **caractérisé par** plusieurs satellites (30₁, 30₂ et 30₃), qui sont individuellement identiques les uns aux autres et dont les axes de rotation secondaires respectifs (Y-Y) sont répartis de manière sensiblement uniforme autour de l'axe de rotation principal (X-X).

6. Réducteur suivant l'une quelconque des revendications précédentes, **caractérisé en ce que** le ou chaque satellite (30₁, 30₂, 30₃) est réalisé en matière plastique.

7. Réducteur suivant l'une quelconque des revendications précédentes, **caractérisé en ce que** chacune des deux extrémités axiales opposées (33₁, 33₂, 33₃) du ou de chaque satellite (30₁, 30₂, 30₃) est supportée par le porte-satellites (40), avec interposition d'un palier (43), notamment d'un roulement à aiguilles, de guidage en rotation autour de l'axe de rotation secondaire (Y-Y) associé à ce satellite.

8. Réducteur suivant l'une quelconque des revendications précédentes, **caractérisé en ce que** les planétaires fixe (10) et mobile (20) sont des solaires autour desquels le ou les satellites (30₁, 30₂, 30₃) sont agencés.

9. Réducteur suivant l'une quelconque des revendications 1 à 7, **caractérisé en ce que** les planétaires fixe et mobile sont des couronnes à l'intérieur desquelles le ou les satellites sont agencés.

10. Mécanisme de transmission de mouvement (50) pour piloter un aéronef, **caractérisé en ce qu'**il comprend un réducteur de vitesse (1 ; 1' ; 1") conforme à l'une quelconque des revendications précédentes.

## Patentansprüche

1. Untersetzungsgetriebe (1; 1'; 1"), mit:
- einem festen Sonnenrad (10), das für die feste Verbindung mit einem Rahmen geeignet ist,
- einem beweglichen Sonnenrad (20), das, relativ zu dem festen Sonnenrad, dazu geeignet ist, sich um sich selbst um eine Hauptrotationsachse (X-X) herum zu drehen, wobei das feste und bewegliche Sonnenrad mit jeweiligen Zahnungen (11, 21) versehen sind, die koaxial und spiralförmig sind, indem sie auf der Hauptrotationsachse zentriert sind, und deren jeweilige Anzahlen von Zahnungen voneinander verschieden sind,
- mindestens einem Planetenrad (30₁, 30₂, 30₃), das um sich selbst um eine Sekundärrotationsachse (Y-Y), die zu der Hauptrotationsachse (X-X) im Wesentlichen parallel ist, herum drehbar ist und das mit einer ersten (31) und einer zweiten (32) Zahnung versehen ist, die spiralförmig sind und auf der Sekundärrotationsachse zentriert sind und die mit der Zahnung (11) des festen Sonnenrads (10) bzw. der Zahnung (21) des beweglichen Sonnenrads (20) in Eingriff kommen, indem sie zu den spiralförmigen Zahnungen des festen und beweglichen Sonnenrads jeweils komplementär sind, und
- einem Planetenradträger (40), der das Planetenrad oder die Planetenräder (30₁, 30₂, 30₃) um ihre Sekundärrotationsachse (Y-Y) herum frei drehbar trägt und der dazu geeignet ist, sich um sich selbst um die Hauptrotationsachse (X-X) herum zu drehen, **dadurch gekennzeichnet, dass** die spiralförmige Zahnung (11) des festen Sonnenrads (10) und die spiralförmige Zahnung (21) des beweglichen Sonnenrads (20) relativ zueinander umgekehrt sind und in der Richtung der Hauptrotationsachse (X-X) voneinander beabstandet sind, wodurch sie zwischen einander einen Freiraum (E) bilden, um, bei der Montage des Getriebes (1), die axiale Positionierung des oder jedes Planetenrads (30₁, 30₂, 30₃) derart anzupassen, dass die erste (31) und zweite (32) Zahnung dieses Planetenrads mit den jeweiligen Zahnungen des festen und beweglichen Sonnenrads in Eingriff kommen.

2. Getriebe nach Anspruch 1, **dadurch gekennzeichnet, dass** die jeweiligen Anzahlen von Zähnen der Zahnung (11) des festen Sonnenrads (10) und der Zahnung (21) des beweglichen Sonnenrads (20) um einen einzigen Zahn voneinander verschieden sind.

3. Getriebe nach einem der Ansprüche 1 oder 2, **dadurch gekennzeichnet, dass** es ferner Spielnachstellmittel aufweist, die imstande sind, mit einer festgelegten Kraft das oder jedes Planetenrad (30₁, 30₂, 30₃) auf die Sonnenräder (10, 20) zu pressen.

4. Getriebe nach einem der vorhergehenden Ansprüche, **dadurch gekennzeichnet, dass** die erste (31) und zweite (32) Zahnung des oder jedes Planetenrads (30₁, 30₂, 30₃) zueinander symmetrisch sind relativ zu einer Ebene P (P1, P2, P3), die zu der Sekundärrotationsachse (Y-Y), die diesem Planetenrad zugeordnet ist, lotrecht ist.

5. Getriebe nach einem der vorhergehenden Ansprüche, **gekennzeichnet durch** mehrere Planetenräder (30₁, 30₂ und 30₃), die einzeln zueinander identisch sind und deren jeweilige Sekundärrotationsachsen (Y-Y) im Wesentlichen gleichmäßig um die Hauptrotationsachse (X-X) herum verkeilt sind.

6. Getriebe nach einem der vorhergehenden Ansprüche, **dadurch gekennzeichnet, dass** das oder jedes Planetenrad (30₁, 30₂, 30₃) aus Kunststoff realisiert ist.

7. Getriebe nach einem der vorhergehenden Ansprüche, **dadurch gekennzeichnet, dass** jedes der zwei entgegengesetzen axialen Enden (33₁, 33₂, 33₃) des oder jedes Planetenrads (30₁, 30₂, 30₃) von dem Planetenradträger (40) getragen wird, mit einem eingesetzten Lager (43), insbesondere einem Nadellager, zur Drehführung um die Sekundärrotationsachse (Y-Y) herum, die diesem Planetenrad zugeordnet ist.

8. Getriebe nach einem der vorhergehenden Ansprüche, **dadurch gekennzeichnet, dass** das feste (10) und bewegliche (20) Sonnenrad Sonnen sind, um die herum das Planetenrad oder die Planetenräder (30₁, 30₂, 30₃) angeordnet sind.

9. Getriebe nach einem der Ansprüche 1 bis 7, **dadurch gekennzeichnet, dass** das feste und bewegliche Sonnenrad Kränze sind, in dessen Innerem das Planetenrad oder die Planetenräder angeordnet sind.

10. Mechanismus zum Übertragen einer Bewegung (50) zum Steuern eines Flugzeugs, **dadurch gekennzeichnet, dass** er ein Untersetzungsgetriebe (1; 1', 1") nach einem der vorhergehenden Ansprüche umfasst.

## Claims

1. Reduction gear (1; 1'; 1"), comprising:
- a stationary sun gear (10) adapted to be integrally attached to a frame,
- a mobile sun gear (20) which, in relation to the stationary sun gear, is adapted to rotate on itself around a main axis of rotation (X-X), with the stationary and mobile sun gears being provided with respective gear teeth (11, 21), which are coaxial and helical, being centred on the main axis of rotation, and of which the respective numbers of teeth are different from one another,
- at least one planet gear (30₁, 30₂, 30₃), which is rotating on itself around a secondary axis of rotation (Y-Y) substantially parallel to the main axis of rotation (X-X) and which is provided with first (31) and second (32) gear teeth which are helical and centred on the secondary axis of rotation and which mesh respectively the gear teeth (11) of the stationary sun gear (10) and the gear teeth (21) of the mobile sun gear (20), respectively atching the helical gear teeth of the station and mobile sun gears, and
- a planet carrier (40), which supports the planet gear or gears (30₁, 30₂, 30₃) in a freely rotating manner around their second axis of rotation (Y-Y) and which is adapted to rotate on itself around a main axis of rotation (X-X), **characterised in that** the helical gear teeth (11) of the stationary sun gear (10) and the helical gear teeth (21) of the mobile sun gear (20) are reversed in relation to one another and are separated from one another according to the direction of the main axis of rotation (X-X), by forming as such between them a free space (E) for, during the assembly of the reduction gear (1), adjusting the axial positioning of the or of each planet gear (30₁, 30₂, 30₃) in such a way as to engage the first (31) and second (32) gear teeth of this planet gear with the respective gear teeth of the stationary and mobile sun gears.

2. Reduction gear according to claim 1, **characterised in that** the respective numbers of teeth of the gear teeth (11) of the stationary sun gear (10) and of the gear teeth (21) of the mobile sun gear (20) differ from one another by a single tooth.

3. Education gear according to one of claims 1 or 2, **characterised in that** it further comprises means for compensating the play, which can also thrust with a defined effort the or each planet gear (30₁, 30₂, 30₃) on the sun gears (10, 20).

4. Reduction gear according to any of the preceding claims, **characterised in that** the first (31) and second (32) gear teeth of the or of each planet gear (30₁, 30₂, 30₃) are symmetrical to one another in relation to a plane (P₁, P₂, P₃) perpendicular to the secondary axis of rotation (Y-Y) associated to this planet gear.

5. Education gear according to any of the preceding claims, **characterised by** several planet gears (30₁, 30₂ and 30₃), which are individually identical to one another and of which the respective secondary axes of rotation (Y-Y) are distributed in a substantially uniform manner aground the main axis of rotation (X-X).

6. Reduction gear according to any of the preceding claims, **characterised in that** the or each planet gear (30₁, 30₂, 30₃) is made of a plastic material.

7. Reduction gear according to any of the preceding claims, **characterised in that** each of the two opposite axial ends (33₁, 33_{2,} 33₃) of the or of each planet gear (30₁, 30₂, 30₃) is supported by the planet carrier (40), with interposition of a bearing (43), in particular a needle bearing, for guiding in rotation aground the secondary axis of rotation (Y-Y) associated to this planet gear.

8. Reduction gear according to any of the preceding claims, **characterised in that** the stationary (10) and mobile (20) sun gears are sun gears around which the planet gear or gears (30₁, 30₂, 30₃) are arranged.

9. Reduction gear according to any of claims 1 to 7, **characterised in that** the stationary and mobile sun gears are crowns inside of which the planes gear or gears are arranged.

10. Movement transmission mechanism (50) for controlling an aircraft, **characterised in that** it comprises a reduction gear (1; 1'; 1") in accordance with any of the preceding claims.
